# EUROPEAN PATENT APPLICATION

(11) **EP 3 742 530 A1**
(43) Date of publication of application: **25.11.2020**
(21) Application number: 18900717.2
(22) Date of filing: 27.11.2018
(51) Int. Cl.: H01M 4/133, H01M 4/62, H01M 10/056, H01M 10/0585

(54) **NEGATIVE ELECTRODE, HALF SECONDARY BATTERY AND SECONDARY BATTERY**

(30) Priority: 19.01.2018 JP 2018006896
(71) Applicant: Hitachi, Ltd., Tokyo 100-8280 (JP)
(72) Inventor: UNEMOTO, Atsushi, Tokyo 100-8280 (JP); UEDA, Suguru, Tokyo 100-8280 (JP); IIJIMA, Atsushi, Tokyo 100-8280 (JP); TANAKA, Akihide, Tokyo 100-8280 (JP); KAWAJI, Jun, Tokyo 100-8280 (JP)
(74) Representative: MERH-IP Matias Erny Reichl Hoffmann Patentanwälte PartG mbB
(86) International application number: PCT/JP2018/043459
(87) International publication number: WO 2019/142502

(57) **Abstract**

An object of the invention is to increase capacity of a negative electrode in a secondary battery.

The invention includes a negative electrode containing a non-aqueous electrolytic solution and a negative electrode active substance, in which a reduction decomposition potential of the non-aqueous electrolytic solution is equal to or lower than a battery reaction potential of the negative electrode active substance, and a content of the negative electrode active substance in the negative electrode is equal to or higher than 76 wt%. The invention may also include a negative electrode, in which the non-aqueous electrolytic solution contains a mixture of an ether-based solvent and a solvated electrolyte salt and a low viscosity organic solvent, and a mixing ratio of the low viscosity organic solvent relative to a total of the mixture and the low viscosity organic solvent is less than 80 wt%, and in the negative electrode, the ether-based solvent may contain tetraglyme.

## Description

### Technical Field

The present invention relates to a negative electrode, a semi-secondary battery, and a secondary battery.

### Background Art

PTL 1 discloses a following content as a technique in related arts in which tetraethylene glycol dimethyl ether is contained in a non-aqueous solvent. The non-aqueous solvent contained in a non-aqueous electrolyte includes ethylene carbonate (EC), propylene carbonate (PC), γ-butyrolactone (BL), and a fourth component including one or more solvents selected from a group consisting of vinylene carbonate, vinylethylene carbonate, ethylene sulfite, phenyl ethylene carbonate, and 12-crown-4 and tetraethylene glycol dimethyl ether, in which a ratio (% by volume) of the EC, the PC, the BL and the fourth component to the entire non-aqueous solvent meets a relationship of 15≤x≤50, 2≤y≤35, 30≤z≤85, and 0<p≤5, where the EC, the PC, the BL and the fourth component are represented by x, y, z, and p respectively.

### Citation List

### Patent Literature

PTL 1: JP-A-2002-15771

### Summary of Invention

### Technical Problem

As in PTL 1, when a content of the fourth component is low, a reduction decomposition potential of the non-aqueous solvent becomes higher than a battery reaction potential of a negative electrode active substance, and solvent molecules in the non-aqueous solvent are preferentially coordinated to lithium ions. Therefore, the non-aqueous solvent, which is unstable to the negative electrode active substance not coordinated with lithium-ions, is contained. At the time, when a content of the negative electrode active substance in the negative electrode is increased in order to increase a capacity of the negative electrode, a total surface area of the negative electrode active substance increases, and a decomposition reaction of the non-aqueous solvent which is unstable to the negative electrode active substance is promoted, and thus the capacity of the negative electrode in the secondary battery may decrease.

An object of the invention is to increase capacity of a negative electrode in a secondary battery.

### Solution to Problem

Features of the invention for solving the above problems are as follows, for example.

The invention includes a negative electrode containing a non-aqueous electrolytic solution and a negative electrode active substance, in which a reduction decomposition potential of the non-aqueous electrolytic solution is equal to or lower than a battery reaction potential of the negative electrode active substance, and a content of the negative electrode active substance in the negative electrode is equal to or higher than 76 wt%.

The present description includes the disclosure content of Japanese Patent Application No. 2018-006896, which is the basis for the priority of the present application.

### Advantageous Effect

According to the invention, the capacity of the negative electrode in the secondary battery can be increased. Problems, configurations, and effects other than those described above will be apparent from the description of the embodiments below.

### Brief Description of Drawings

[FIG. 1] FIG. 1 is a cross-sectional view of a secondary battery.
[FIG. 2] FIG. 2 shows configurations and results of Examples and Comparative Examples.

### Description of Embodiments

Hereinafter, embodiments of the invention will be described below with reference to drawings and the like. The following description shows specific examples of the contents of the invention, the invention is not limited to the description, and various changes and modifications can be made by those skilled in the art within the scope of the technical idea disclosed in the description. In all the drawings for explaining the invention, those having the same function are denoted by the same reference numerals, and repeated description thereof may be omitted.

An expression "to" described in the description is used with a meaning that includes numerical values described therebefore and thereafter as a lower limit value and an upper limit value. In numerical value ranges described stepwisely in the description, the upper limit value or the lower limit value described in one numerical value range may be replaced with another upper limit value or lower limit value described stepwisely. The upper limit value or the lower limit value of the numerical value ranges described in the description may be replaced with a value shown in the examples.

In the present description, a lithium-ion secondary battery will be described as an example of a secondary battery. The lithium-ion secondary battery is an electrochemical device that can store electrical energy by occluding lithium ions to an electrode in an electrolyte or utilize electrical energy by releasing lithium ions from the electrode in the electrolyte. The lithium-ion secondary battery is also referred to as other names of a lithium-ion battery, a non-aqueous electrolyte secondary battery, and a non-aqueous electrolytic solution secondary battery, and any of the batteries is an object of the invention. A technical idea of the invention can also be applied to a sodium ion secondary battery, a magnesium ion secondary battery, a calcium ion secondary battery, a zinc secondary battery, an aluminum ion secondary battery, and the like.

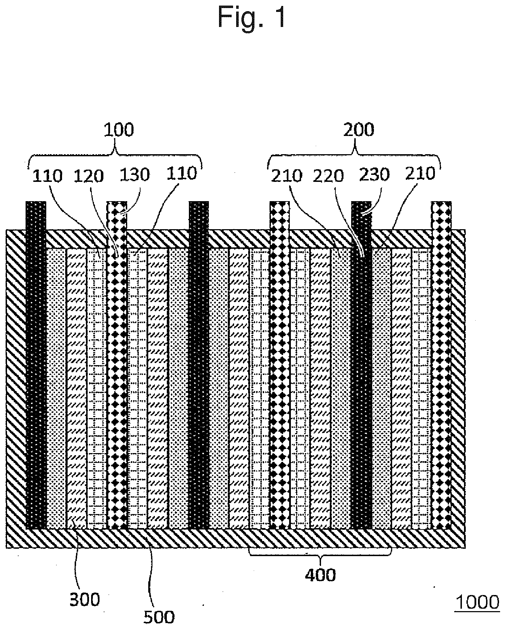

FIG. 1 is a cross-sectional view of the secondary battery according to one embodiment of the invention. FIG. 1 is a laminated-type secondary battery, and the secondary battery 1000 includes positive electrodes 100, negative electrodes 200, an exterior body 500, and insulating layers 300. The exterior body 500 accommodates the insulating layers 300, the positive electrodes 100, and the negative electrodes 200. A material of the exterior body 500 can be selected from materials having corrosion resistance to non-aqueous electrolytes, such as aluminum, stainless steel, nickel-plated steel, and the like. The invention is also applicable to a wound-type secondary battery.

Electrode bodies 400 formed of the positive electrodes 100, the insulating layers 300, and the negative electrodes 200 are laminated in a secondary battery 1000. Each positive electrode 100 or each negative electrode 200 may be referred to as an electrode or a secondary battery electrode in some cases. Each positive electrode 100, each negative electrode 200, or each insulating layer 300 may be referred to as a secondary battery sheet in some cases. A battery with an integrated structure of the insulating layers 300 and the positive electrodes 100 or the negative electrodes 200 may be referred to as a semi-secondary battery in some cases.

Each positive electrode 100 has a positive electrode current collector 120 and positive electrode mixture layers 110. The positive electrode mixture layers 110 are formed on both surfaces of the positive electrode current collector 120. Each negative electrode 200 has a negative electrode current collector 220 and negative electrode mixture layers 210. The negative electrode mixture layers 210 are formed on both surfaces of the negative electrode current collector 220. Each positive electrode mixture layer 110 or each negative electrode mixture layer 210 may be referred to as an electrode mixture layer, and the positive electrode current collector 120 or the negative electrode current collector 220 may be referred to as an electrode current collector in some cases.

The positive electrode current collector 120 has a positive electrode tab portion 130. The negative electrode current collector 220 has a negative electrode tab portion 230. The positive electrode tab portion 130 or the negative electrode tab portion 230 may be referred to as an electrode tab portion in some cases . No electrode mixture layer is formed on the electrode tab portion. However, the electrode mixture layer may be formed on the electrode tab portion without adversely affecting a performance of the secondary battery 1000. The positive electrode tab portion 130 and the negative electrode tab portion 230 protrude to an outside of the exterior body 500. A plurality of protruding positive electrode tab portions 130 are joined to each other and a plurality of protruding negative electrode tab portions 230 are joined to each other by, for example, ultrasonic bonding, to form a parallel connection in the secondary battery 1000. The invention is also applicable to a bipolar-type secondary battery in which an electrical series connection is formed in the secondary battery 1000.

The positive electrode mixture layer 110 includes a positive electrode active substance, a positive electrode conductive agent, and a positive electrode binder. The negative electrode mixture layer 210 includes a negative electrode active substance, a negative electrode conductive agent, and a negative electrode binder. A non-aqueous electrolytic solution positive electrode active substance or negative electrode active substance may be referred to as an electrode active substance, the positive electrode conductive agent or the negative electrode conductive agent may be referred to as an electrode conductive agent, and the positive electrode binder or the negative electrode binder may be referred to as an electrode binder in some cases.

### <Electrode Conductive Agent>

The electrode conductive agent improves conductivity of the electrode mixture layer. Examples of the electrode conductive agent include, but are not limited to, Ketjen Black, acetylene black, and graphite.

### <Electrode Binder>

The electrode binder binds the electrode active substance, the electrode conductive agent, and the like in the electrode. Examples of the electrode binder include, but are not limited to, styrene-butadiene rubber, carboxymethyl cellulose, polyvinylidene fluoride (PVDF), and a mixture thereof.

### <Positive Electrode Active Substance>

In the positive electrode active substance exhibiting a noble potential, lithium ions are desorbed in a charging process, and lithium ions desorbed from the negative electrode active substance are inserted in a discharging process. Examples of the positive electrode active substance preferably include a lithium composite oxide containing a transition metal, and specific examples include LiMO₂, Li[LiM]O₂ with an excess composition of Li, LiM₂O₄, LiMPO₄, LiMVOₓ, LiMBO₃, and Li₂MSiO₄ (in which, M = containing at least one of Co, Ni, Mn, Fe, Cr, Zn, Ta, Al, Mg, Cu, Cd, Mo, Nb, W, Ru and the like) . Some oxygen in the materials may be replaced with other elements such as fluorine. Further, examples include, but are not limited to, sulfur; a chalcogenide such as TiS₂, MoS₂, Mo₆S₈, and TiSe₂; a vanadium-based oxide such as V₂O₅; a halide such as FeF₃; Fe(MoO₄)₃, Fe₂(SO₄)₃, Li₃Fe₂(PO₄)₃ or the like that constitutes a polyanion; a quinone-based organic crystal; and the like. Further, a lithium or anion amount in a chemical composition may be deviated from the above-described constant stoichiometric compositions.

### <Positive Electrode Current Collector 120>

Examples of the positive electrode current collector 120 include, but are not limited to, an aluminum foil having a thickness of 1 to 100 µm, a perforated aluminum foil having a thickness of 10 to 100 µm and holes with a hole diameter of 0.1 to 10 mm, an expanded metal, a foamed metal plate, stainless steel, titanium, and the like.

### <Negative Electrode Active Substance>

In the negative electrode active substance exhibiting an ignoble potential, lithium ions are desorbed during the discharging process, and lithium ions desorbed from the positive electrode active substance in the positive electrode mixture layer 110 are inserted in the charging process. Examples of the negative electrode active substance include, but are not limited to, a carbon-based material (graphite, graphitizable carbon material, amorphous carbon material, organic crystal, activated carbon, and the like), a conductive polymer material (polyacene, polyparaphenylene, polyaniline, polyacetylene, and the like), a lithium composite oxide (lithium titanate: Li₄Ti₅O₁₂, Li₂TiO₄, and the like), metal lithium, metals alloying with lithium (including at least one kind of aluminum, silicon, tin, and the like), and oxides thereof.

### <Negative Electrode Current Collector 220>

Examples of the negative electrode current collector 220 include, but are not limited to, a copper foil having a thickness of 1 to 100 µm, a copper piercing foil having a thickness of 1 to 100 µm and a hole diameter of 0.1 to 10 mm, an expanded metal, a foamed metal plate, stainless steel, titanium, nickel, and the like.

### <Electrode>

The electrode mixture layer is prepared by attaching an electrode slurry obtained by mixing the electrode active substance, the electrode conductive agent, the electrode binder, and an organic solvent to the electrode current collector by a coating method such as a doctor blade method, a dipping method, or a spray method. Thereafter, an electrode is prepared by drying the electrode mixture layer to remove the organic solvent, and pressure-molding the electrode mixture layer by roll pressing.

Non-aqueous electrolytic solution may be filled into the secondary battery 1000 from one empty side or a liquid filling hole of the exterior body 500, and the non-aqueous electrolytic solution may be filled in pores of the electrode mixture layer. In this case, particles such as the electrode active substance and the electrode conductive agent in the electrode mixture layer function as carrier particles and hold the non-aqueous electrolytic solution, without requiring carrier particles contained in a semi-solid electrolyte. Another method of filling the pores of the electrode mixture layer with the non-aqueous electrolytic solution is a method of preparing a slurry obtained by mixing a semi-solid electrolyte, an electrode active substance, an electrode conductive agent, and an electrode binder, and applying the prepared slurry together on the electrode current collector.

A thickness of the electrode mixture layer is preferably equal to or larger than an average particle diameter of the electrode active substance. If the thickness of the electrode mixture layer is small, electron conductivity between adjacent electrode active substances may deteriorate. When coarse particles having an average particle diameter equal to or larger than the thickness of the electrode mixture layer exist in an electrode active substance powder, the coarse particles are preferably removed in advance by sieving classification, air flow classification, or the like to allow particles equal to or smaller than the thickness of the electrode mixture layer.

### <Insulating Layer 300>

The insulating layer 300 serves as a medium that transmits ions between the positive electrode 100 and the negative electrode 200. The insulating layer 300 also acts as an insulator of electrons to prevent a short circuit between the positive electrode 100 and the negative electrode 200. The insulating layer 300 includes a separator or a semi-solid electrolyte layer. The separator or the semi-solid electrolyte layer may be used in combination as the insulating layer 300.

### <Separator>

A porous sheet can be used as the separator. Examples of the porous sheet include, but are not limited to: resins such as cellulose, modified cellulose (carboxymethyl cellulose (CMC), hydroxypropyl cellulose (HPC), and the like), polyolefins (polypropylene (PP), copolymers of propylene, and the like), polyesters (polyethylene terephthalate (PET)), polyethylene naphthalate (PEN), polybutylene terephthalate (PBT), and the like), polyacrylonitrile (PAN), polyaramid, polyamide-imide, and polyimide; glass; and the like. The materials may be used alone or in combination of two or more thereof. A short circuit between the positive electrode 100 and the negative electrode 200 can be prevented by allowing an area of the separator to be larger than the positive electrode 100 or the negative electrode 200.

The separator may be formed by applying a separator forming mixture containing separator particles, a separator binder, and a solvent to the electrode mixture layer. The separator forming mixture may be applied to the porous sheet described above.

Examples of the separator particles include, but are not limited to, γ-alumina (Al₂O₃), silica (SiO₂), and zirconia (ZrO₂). The materials may be used alone or in combination of two or more thereof. An average particle diameter of each separator particle is preferably 1/100 to 1/2 of a thickness of the separator. Examples of the separator binder include, but are not limited to, polyethylene (PE), PP, polytetrafluoroethylene (PTFE), polyvinylidene fluoride (PVDF), copolymer (PVdF-HFP) of vinylidene fluoride (VDF) and hexafluoropropylene (HFP), styrene-butadiene rubber (SBR), polyalginic acid, polyacrylic acid, and the like. The materials may be used alone or in combination of two or more thereof. Examples of the solvent include, but are not limited to, N-methylpyrrolidone (NMP), water, and the like.

When the separator is used as the insulating layer 300, the non-aqueous electrolytic solution is filled into the separator by filling the non-aqueous electrolytic solution into the secondary battery 1000 from one empty side or the liquid filling hole of the exterior body 500.

### <Semi-solid Electrolyte Layer>

The semi-solid electrolyte layer includes a semi-solid electrolyte binder and a semi-solid electrolyte. The semi-solid electrolyte includes the carrier particles and the non-aqueous electrolytic solution. The semi-solid electrolyte has pores formed by aggregates of the carrier particles, and the non-aqueous electrolytic solution is held therein. The semi-solid electrolyte allows the lithium ions to pass therethrough by holding the non-aqueous electrolytic solution in the semi-solid electrolyte. When the semi-solid electrolyte layer is used as the insulating layer 300 and the non-aqueous electrolytic solution is filled in the electrode mixture layer, the non-aqueous electrolytic solution is not required to be filled into the secondary battery 1000. For example, when the insulating layer 300 includes the separator, the non-aqueous electrolytic solution may be filled into the secondary battery 1000 from one empty side or the liquid filling hole of the exterior body 500.

### <Carrier Particles>

From a viewpoint of electrochemical stability, the carrier particles are preferably insulating particles and are insoluble in the non-aqueous electrolytic solution. For example, oxide inorganic particles such as SiO₂ particles, Al₂O₃ particles, ceria (CeO₂) particles, and ZrO₂ particles can be preferably used as the carrier particles. A solid electrolyte may be used as the carrier particles. Examples of the solid electrolyte include inorganic solid electrolytes such as oxide-based solid electrolytes such as Li-La-Zr-O and sulfide-based solid electrolytes such as Li₁₀Ge₂PS₁₂, and the like.

An average particle diameter of a primary particle of the carrier particles is preferably 1 nm to 10 µm since a holding amount of the non-aqueous electrolytic solution is considered to be proportional to a specific surface area of the carrier particles. When the average particle diameter of the primary particle of the carrier particles is large, the carrier particles cannot adequately hold a sufficient amount of the non-aqueous electrolytic solution, which may make it difficult to form the semi-solid electrolyte. When the average particle diameter of the primary particle of the carrier particles is small, a surface force between the carrier particles becomes large, and the carrier particles easily aggregate, which may make it difficult to form the semi-solid electrolyte. The average particle diameter of the primary particles of the carrier particles is more preferably 1 to 50 nm, and still more preferably 1 to 10 nm. The average particle diameter of the primary particle of the carrier particles can be measured by a known particle diameter distribution analyzer using a laser scattering method.

### <Non-aqueous Electrolytic Solution>

The non-aqueous electrolyte solution includes a non-aqueous solvent, an optional low viscosity organic solvent, and an optional negative electrode interface stabilizer. The non-aqueous solvent contains an organic solvent, an ionic liquid, or a mixture (complex) of the ether-based solvent and the solvated electrolyte salt exhibiting a similar property to an ionic liquid. The organic solvent, the ionic liquid, or the ether-based solvent may be referred to as a main solvent in some cases . The ionic liquid is a compound that dissociates into cations and anions at a room temperature, and maintains a liquid state. The ionic liquid may be referred to as a liquid with ionic property, a low melting point molten salt, or a room temperature molten salt. From a viewpoint of stability in the atmosphere and heat resistance in the secondary battery, it is preferable that the non-aqueous solvent has a low volatility, specifically, a vapor pressure equal to or lower than 150 Pa at room temperature, but not limited thereto.

When the non-aqueous electrolytic solution is contained in the electrode mixture layer, a content of the non-aqueous electrolytic solution in the electrode mixture layer is preferably 20 to 40 vol%. When the content of the non-aqueous electrolytic solution is low, there is a possibility that an ion conduction path inside the electrode mixture layer is not sufficiently formed, and rate characteristics deteriorate. When the content of the non-aqueous electrolytic solution is high, there is a possibility that the non-aqueous electrolytic solution leaks from the electrode mixture layer, and in addition, the electrode active substance becomes insufficient, which may lead to a decrease in energy density.

A content of the non-aqueous electrolytic solution in the semi-solid electrolyte layer is preferably 70 to 90 vol%. When the content of the non-aqueous electrolytic solution is low, the interface resistance between the electrode and the semi-solid electrolyte layer may increase. When the content of the non-aqueous electrolytic solution is high, there is a possibility that the non-aqueous electrolytic solution leaks out from the semi-solid electrolyte layer.

Examples of the non-aqueous solvent include carbonate esters such as ethylene carbonate (EC), butylene carbonate (BC), dimethyl carbonate (DMC), diethyl carbonate (DEC), and methylethyl carbonate (MEC), γ-butyrolactone, formamide, and dimethylformamide. The non-aqueous solvents may be used alone or in combination of two or more thereof.

The ionic liquid contains cations and anions. The ionic liquid is classified into an imidazolium type, an ammonium type, a pyrrolidinium type, a piperidinium type, a pyridinium type, a morpholinium type, a phosphonium type, a sulfonium type, and the like, depending on cationic species. Examples of cations constituting the imidazolium-based ionic liquid include an alkylimidazolium cation such as 1-butyl-3-methylimidazolium (BMI). Examples of cations constituting the ammonium-based ionic liquid include an alkylammonium cation such as N,N,N-trimethyl-N-propyl ammonium in addition to tetraamylammonium and the like. Examples of cations constituting the pyrrolidinium-based ionic liquid include an alkylpyrrolidinium cation such as N-methyl-N-propylpyrrolidinium (Py13) and 1-butyl-1-methyl pyrrolidinium. Examples of cations constituting the piperidinium-based ionic liquid include an alkylpiperidinium cation such as N-methyl-N-propylpiperidinium (PP13) and 1-butyl-1-methylpiperidinium. Examples of cations constituting the pyridinium-based ionic liquid include an alkylpyridinium cation such as 1-butylpyridinium and 1-butyl-4-methyl pyridinium. Examples of cations constituting the morpholinium-based ionic liquid include alkyl morpholinium such as 4-ethyl-4-methylmorpholinium. Examples of cations constituting the phosphonium-based ionic liquid include an alkyl phosphonium cation such as tetrabutylphosphonium and tributylmethylphosphonium. Examples of cations constituting the sulfonium-based ionic liquid include an alkylsulfonium cation such as trimethylsulfonium and tributylsulfonium. Examples of anions paired with the cations include bis(trifluoromethanesulfonyl)imide (TFSI), bis(fluorosulfonyl)imide, tetrafluoroborate (BF₄), hexafluorophosphate (PF₆), bis(pentafluoroethanesulfonyl)imide (BETI), trifluoromethanesulfonate (triflate), acetate, dimethylphosphate, dicyanamide, and trifluoro (trifluoromethyl) borate. The ionic liquids may be used alone or in combination of two or more thereof.

The non-aqueous solvent or the ionic liquid may include an electrolyte salt. A salt that can be uniformly dispersed in a solvent can be used as the electrolyte salt. Those include lithium as a cation and the above as an anion can be used as a lithium salt. Examples of the lithium salt include, but are not limited to, lithium bis(fluorosulfonyl)imide (LiFSI), lithium bis (trifluoromethanesulfonyl) imide (LiTFSI), lithium bis(pentafluoroethanesulfonyl)imide (LiBETI), lithium tetrafluoroborate (LiBF₄), lithium hexafluorophosphate (LiPF₆), lithium triflate, and the like. The electrolyte salts may be used alone or in combination of two or more thereof.

The ether-based solvent constitutes the solvated electrolyte salt and a solvated ionic liquid. Known glyme (generic name for symmetric glycol diether represented by R-O(CH₂CH₂O)ₙ-R' (R and R' are saturated hydrocarbons, and n is an integer)) exhibiting properties similar to ionic liquid can be used as the ether-based solvent. From a viewpoint of ion conductivity, tetraglyme (tetraethylene dimethyl glycol, G4), triglyme (triethylene glycol dimethyl ether, G3), pentaglyme (pentaethylene glycol dimethyl ether, G5), and hexaglyme (hexaethylene glycol dimethyl ether, G6) can be used. A crown ether (generic name for macrocyclic ether represented by (-CH₂-CH₂-O)ₙ (n is an integer)) can be used as the ether-based solvent. Specifically, 12-crown-4, 15-crown-5, 18-crown-6, dibenzo-18-crown-6, and the like can be used, without being limited thereto. The ether-based solvents may be used alone or in combination of two or more thereof. It is preferable to use tetraglyme and triglyme in that a complex structure can be formed with the solvated electrolyte salt.

A lithium salt such as LiFSI, LiTFSi, or LiBETI can be used as the solvated electrolyte salt, but not limited thereto. A mixture of an ether-based solvent and a solvated electrolyte salt may be used alone or in combination of two or more thereof as the non-aqueous solvent.

Although a weight ratio of the main solvent in the non-aqueous electrolytic solution is not particularly limited, from a viewpoint of battery stability and high-speed charge and discharge, a weight ratio of the main solvent to a total of the solvents in the non-aqueous electrolytic solution is preferably 30 to 70 wt%, more preferably 40 to 60 wt%, and still more preferably 45 to 55 wt%.

### <Low Viscosity Organic Solvent>

The low viscosity organic solvent lowers viscosity of the non-aqueous electrolyte solution and improves ionic conductivity. Since an internal resistance of the non-aqueous electrolyte solution is high, the internal resistance of the non-aqueous electrolytic solution can be reduced by adding the low viscosity organic solvent to increase the ionic conductivity of the non-aqueous electrolytic solution.

The low viscosity organic solvent is, for example, a solvent of a mixture of the ether-based solvent and the solvated electrolyte salt, having a viscosity of less than 140 Pa·s at 25°C, but is not limited thereto. Examples of the low viscosity organic solvent include propylene carbonate (PC), trimethyl phosphate (TMP), gamma butyl lactone (GBL), ethylene carbonate (EC), triethyl phosphate (TEP), tris(2,2,2-trifluoroethyl) phosphite (TFP), and dimethyl methylphosphonate (DMMP). The low viscosity organic solvents may be used alone or in combination of two or more thereof. The electrolyte salt may be dissolved in the low viscosity organic solvent.

### <Solvent Component and Negative Electrode Active Substance Amount>

When an amount of the negative electrode active substance such as graphite in the negative electrode 200 is increased to increase capacity of the negative electrode 200, the total surface area of the negative electrode active substance in the negative electrode 200 increases. Depending on the solvent component in the non-aqueous electrolytic solution, a reductive decomposition reaction of the solvent component on a surface of the negative electrode active substance may be faster than a reductive decomposition reaction of the negative electrode interface stabilizer, and the capacity of the negative electrode 200 may decrease. The solvent component refers to a combination of a non-aqueous solvent and an optional low viscosity organic solvent.

Thus, by allowing the reduction decomposition potential of the non-aqueous electrolytic solution to be lower than the battery reaction potential of the negative electrode active substance, a decrease in capacity of the negative electrode 200 can be prevented even when the negative electrode active substance amount in the negative electrode 200 is increased to equal to or more than 76 wt%, equal to or more than 88 wt% and equal to or more than 94 wt%. The reduction decomposition potential of the non-aqueous electrolytic solution means a reductive decomposition potential of the solvent component. The negative electrode active substance amount can be measured by Raman spectroscopy measurement or the like. The reduction decomposition potential of the non-aqueous electrolytic solution and the battery reaction potential of the negative electrode active substance can be measured by cyclic voltammetry measurement or the like. Tetraglyme may be included as the non-aqueous electrolytic solution. This is because tetraglyme has a coordination structure excellent in reduction stability for lithium ions.

When the negative electrode active substance is graphite, since the battery reaction potential of the negative electrode active substance is equal to or smaller than 0.5 V, the reduction decomposition potential of the non-aqueous electrolytic solution is preferably equal to or smaller than 0.5 V. When an ionic liquid is contained in the non-aqueous solvent as a solvent component having the reduction decomposition potential of equal to or smaller than 0.5 V, the ionic liquid is, for example, Py13TFSI, PP13TFSI, and the like. When the non-aqueous solvent is a mixed solvent of an ether-based solvent and a low viscosity organic solvent, a mixing ratio of the low viscosity organic solvent to a weight of the non-aqueous electrolytic solution is preferably less than 80 wt%, more preferably equal to or less than 70 wt%, and still more preferably equal to or less than 50 wt%. The mixing ratio of the low viscosity organic solvent to the weight of the non-aqueous electrolytic solution can be quantified by NMR measurement or the like. When the non-aqueous electrolytic solution has a negative electrode interface stabilizer, the negative electrode interface stabilizer is excluded as a weight of the non-aqueous electrolytic solution when the mixing ratio of the low viscosity organic solvent is calculated. PC may be used as the low viscosity organic solvent. Since PC does not disturb the complex structure of the ether-based solvent and the solvated electrolyte salt, the internal resistance of the secondary battery can be lowered and the capacity of the negative electrode 200 can be increased.

### <Negative Electrode Interface Stabilizer>

By including the negative electrode interface stabilizer in the non-aqueous electrolytic solution, it is possible to improve rate characteristics and battery life of the secondary battery. An addition amount of the negative electrode interface stabilizer is preferably equal to or less than 30 wt%, more preferably equal to or less than 10 wt%, based on the weight of the non-aqueous electrolytic solution. If the addition amount is equal to or less than 30 wt%, solvation structures of the ether-based solvent and the solvated electrolyte salt are not greatly disturbed even if the negative electrode interface stabilizer is introduced. Examples of the negative electrode interface stabilizer include, but are not limited to, vinylene carbonate (VC) and fluoroethylene carbonate (FEC). The negative electrode interface stabilizers may be used alone or in combination of two or more thereof.

### <Semi-solid Electrolyte Binder>

A fluorine-based resin may be used as the semi-solid electrolyte binder. PVDF or P(VdF-HFP) may be used as the fluorine-based resin. The semi-solid electrolyte binders may be used alone or in combination of two or more thereof. Since adhesion between the insulating layer 300 and the electrode current collector is improved by using PVDF or P(VdF-HFP), battery performance is improved.

### <Semi-solid Electrolyte>

The non-aqueous electrolytic solution is supported on or held in the carrier particles to form the semi-solid electrolyte. An example of a method for preparing a semi-solid electrolyte includes mixing the non-aqueous electrolytic solution and the carrier particles at a specific volume ratio, adding and mixing the organic solvent such as methanol, blending a slurry of the semi-solid electrolyte, spreading the slurry to a petri dish, and distilling off the organic solvent to obtain a semi-solid electrolyte powder.

### <Semi-solid Electrolyte Layer>

Methods for preparing the semi-solid electrolyte layer include a method of compression-molding a semi-solid electrolyte powder into a pellet shape by a molding die or the like, a method of adding and mixing a semi-solid electrolyte binder into a semi-solid electrolyte powder to form a sheet, and a method of preparing a mixed solution in which a negative electrode interface stabilizer is added to a main solvent, mixing the mixed solution with carrier particles at a predetermined ratio, then further adding and mixing a semi-solid electrolyte binder, and pressing to obtain a sheet. By adding and mixing the powder of the semi-solid electrolyte binder into the semi-solid electrolyte, it is possible to prepare a sheet-shaped semi-solid electrolyte layer having high flexibility. A semi-solid electrolyte layer can be prepared by adding and mixing a solution of a binder in which a semi-solid electrolyte binder is dissolved in a dispersion solvent to the semi-solid electrolyte, and distilling off the dispersion solvent. The semi-solid electrolyte layer may be prepared by applying and drying on an electrode.

### Examples

Hereinafter, although the invention is described more specifically below by referring to examples, the invention is not limited only to the examples.

### <Example 1>

### <Semi-solid Electrolyte>

G4 and LiTFSI were weighed such that a molar ratio was 1:1, and the mixture was put into a beaker and mixed until becoming a uniform solvent to prepare a lithium glyme complex. The prepared lithium glyme complex was weighed such that a weight of VC as the negative electrode interface stabilizer was 3 wt% relative to the lithium glyme complex to prepare a mixed solvent (non-aqueous electrolytic solution). The mixed solvent and fumed silica nanoparticles having a particle diameter of 7 nm were weighed such that a volume ratio was 80:20, a volume of methanol was further weighed to be twice an amount of the mixed solvent, and the mixture was put into a beaker with a stirrer and stirred at 600 rpm using the stirrer to obtain a uniform mixture. The mixture was put into an eggplant flask and dried using an evaporator at 100 mbar at 60°C for 3 hours. The dried powder was sieved through a 100 µm mesh sieve to obtain a powdery semi-solid electrolyte.

### <Insulating Layer 300>

The semi-solid electrolyte powder and the PTFE were weighed respectively such that a weight ratio was 95:5 and put into a mortar, and the mixture was uniformly mixed. The mixture was set in a hydraulic press machine via a PTFE sheet and pressed at 400 kgf/cm². Further, the mixture was calendered by a roll press machine with a gap set to 500 to prepare a sheet-shaped insulating layer 300 having a thickness of 200 µm. The calendered mixture was punched at a diameter of 16 mm and used as a solid electrolyte.

### <Positive Electrode 100>

The positive electrode 100 was formed by punching a metal lithium foil with a diameter of 13 mm and used

### <Negative Electrode 200>

Graphite was used as the negative electrode active substance. Acetylene black was used as the negative electrode conductive agent, and PVDF which was dissolved in N-methylpyrrolidone was used as the negative electrode binder. The graphite, the acetylene black and the PVDF were weighed such that a weight ratio was 88:2:10 and mixed, and was used as a negative electrode slurry. The slurry was applied onto a stainless steel foil as the negative electrode current collector 220, dried at 80°C for 2 hours to remove the N-methylpyrrolidone to obtain a negative electrode 200. The negative electrode 200 was punched and uniaxially pressed at a diameter of 13 mm to obtain the negative electrode 200 having a double-sided applying amount of 16.5 mg/cm² and a density of 1.6 g/cm³.

### <Lithium-ion Secondary Battery>

The negative electrode 200, the insulating layer 300, and the positive electrode 100 punched to a diameter of 13 mm were laminated and sealed in a 2032 type coin cell to obtain the lithium-ion secondary battery.

### <Charging Capacity>

The lithium-ion secondary battery was evaluated at a measurement voltage range of 2.7 to 4.2 V, by operating the lithium-ion secondary battery in a constant current and constant low voltage mode during charging and in a constant current mode during discharging. The charging capacity of the negative electrode 200 was evaluated by charging and discharging at a current density of 120 µA/cm². The charging capacity is a reaction in which lithium ions are desorbed from the graphite in the negative electrode 200. The charging capacity was normalized relative to a weight of graphite contained in the negative electrode 200.

### <Negative Electrode Volume Capacity>

The capacity obtained in the battery evaluation was normalized by a volume of the negative electrode mixture layer 210 to convert the negative electrode volume capacity. A negative electrode volume was calculated from a measured thickness of the negative electrode mixture layer 210 and a punched electrode diameter.

### <Examples 2 to 13>

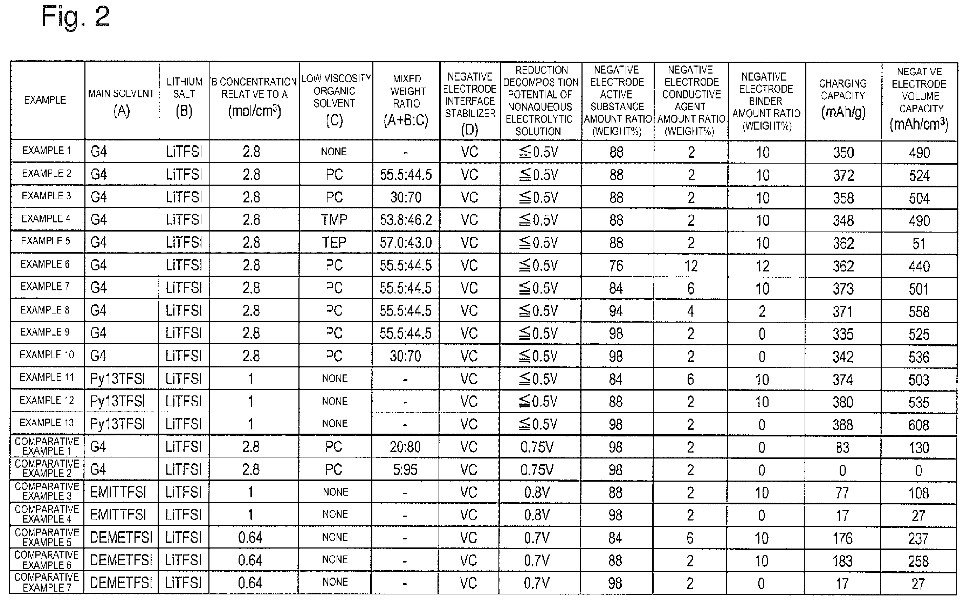

Same procedures as in Example 1 were repeated except that mixed weight ratios of the main solvent and the low viscosity organic solvent in the non-aqueous electrolytic solution and the like were set as shown in FIG. 2.

### <Comparative Examples 1 to 8>

Same procedures as in Example 1 were repeated except that mixed weight ratios of the main solvent and the low viscosity organic solvent in the non-aqueous electrolytic solution and the like were set as shown in FIG. 2.

### <Results and Discussion>

In Comparative Example 1 and Comparative Example 2 in which lithium glyme complex and PC as the low viscosity organic solvent were mixed and used as the non-aqueous solvent with a large PC weight ratio and a large negative electrode active substance amount ratio, the charging capacity was equal to or smaller than 83 mAh/g, and the negative electrode volume capacity was equal to or smaller than 130 mAh/cm³. On the other hand, in Examples 1 to 9 in which the weight ratio of the low viscosity organic solvent was relatively small, the charging capacity was a large value of equal to or larger than 335 mAh/g, and the negative electrode volume capacity was a large value of equal to or larger than 440 mAh/cm³, regardless of the negative electrode active substance amount ratio.

In the non-aqueous electrolytic solution having a large mixing ratio of PC, it is considered that the PC is coordinated with lithium ions to disturb a stable lithium glyme complex structure, and free glyme solvent molecules unstable to graphite is generated, resulting in a decrease in stability. In fact, in a battery of a comparative example, during discharging in a reaction in which lithium ions were inserted into graphite, a plateau appeared in a vicinity when the reduction decomposition potential of the non-aqueous electrolytic solution was 0.75 V, which was considered to be derived from a side reaction. On the other hand, it was found that such a plateau was not seen in batteries of the Examples, and the reduction decomposition potential of the non-aqueous electrolytic solution on the graphite surface in the Examples was equal to or lower than 0.5 V (battery reaction potential of graphite) at which a battery reaction of graphite was started.

Since the negative electrode 200 is prepared with an electrode applying amount kept constant at 16.5 mAh/g, a total surface area of the negative electrode active substance in the negative electrode 200 increases as a negative electrode active substance amount ratio increases. Since the larger the negative electrode active substance amount ratio is, the smaller the charging capacity and the negative electrode volume capacity are, the negative electrode 200 having a large total surface area of the negative electrode active substance suggests that the decomposition reaction of the non-aqueous electrolytic solution was further promoted.

As shown in Examples 11 to 13, when Py13TFSI, which is stable to graphite, was selected as the main solvent of the non-aqueous electrolytic solution, the charging capacity was equal to or larger than 374 mAh/g and the negative electrode volume capacity was equal to or larger than 503 mAh/g regardless of the negative electrode active substance amount ratio, and a plateau other than the battery reaction did not appear during a charging reaction. On the other hand, as in Comparative Examples 3 to 7, when EMITFSI, which has a reduction decomposition potential of the non-aqueous electrolytic solution on a surface of the graphite of 0.8 V, or DEMETFSI, which has a reduction decomposition potential of the non-aqueous electrolytic solution on the surface of the graphite of 0.7 V was used as the main solvent of the non-aqueous electrolytic solution, the charging capacity was equal to or smaller than 183 mAh/g, and the negative electrode volume capacity was equal to or smaller than 258 mAh/g, and a plateau appeared at each reductive decomposition potential, which was considered to be a decomposition reaction at the surface of the graphite in the main solvent. Since a tendency was seen in which the larger the negative electrode active substance amount ratio is, the smaller the charging capacity and the negative electrode volume capacity is, it was suggested that, similar as in an example using G4 as the main solvent, on the surface of the negative electrode 200 having a large surface area, decomposition reaction of the main solvent was promoted, leading to a decrease in capacity.

Therefore, in order to increase the capacity of the negative electrode 200, it is desirable that the non-aqueous electrolytic solution contains a solvent component whose reduction decomposition potential is equal to or lower than the battery reaction potential of the negative electrode active substance. That is, when PC or the like is used as the low viscosity organic solvent, the mixed weight ratio of the PC is preferably less than 80 wt%, more preferably equal to or less than 70 wt%, still more preferably equal to or less than 50 wt% based on a total weight of the non-aqueous electrolytic solution. When Py13TFSI is used as the main solvent, reduction stability at an interface between the negative electrode 200 and the insulating layer 300 is achieved, and the capacity of the negative electrode 200 can be increased. In order to combine with a positive electrode active substance having a high reaction potential to increase the capacity of a battery, it is desirable to use a non-aqueous electrolytic solution containing the main solvents, and allow a volume capacity of the negative electrode 200 to be equal to or larger than 440 mAh/cm³, and a weight ratio of the negative electrode active substance to be equal to or larger than 84 wt%, particularly, allow the volume capacity of the negative electrode 200 to be equal to or larger than 490 mAh/cm³, and the weight ratio of the negative electrode active substance to be equal to or larger than 88 wt%.

### Reference Sign List

- 100: positive electrode
- 110: positive electrode mixture layer
- 120: positive electrode current collector
- 130: positive electrode tab portion
- 200: negative electrode
- 210: negative electrode mixture layer
- 220: negative electrode current collector
- 230: negative electrode tab portion
- 300: insulating layer
- 400: electrode body
- 500: exterior body
- 1000: secondary battery

All publications, patents, and patent applications cited in the description are hereby incorporated in the description by reference as it is.

## Claims

1. A negative electrode containing a non-aqueous electrolytic solution and a negative electrode active substance, wherein
a reduction decomposition potential of the non-aqueous electrolytic solution is equal to or lower than a battery reaction potential of the negative electrode active substance, and
a content of the negative electrode active substance in the negative electrode is equal to or higher than 76 wt%.

2. The negative electrode according to claim 1, wherein
the non-aqueous electrolytic solution contains a mixture of an ether-based solvent and a solvated electrolyte salt and a low viscosity organic solvent, and
a mixing ratio of the low viscosity organic solvent relative to a total of the mixture and the low viscosity organic solvent is less than 80 wt%.

3. The negative electrode according to claim 2, wherein
the ether-based solvent contains tetraglyme.

4. The negative electrode according to claim 2, wherein
the low viscosity organic solvent contains propylene carbonate.

5. The negative electrode according to claim 1, wherein
the non-aqueous electrolytic solution contains a negative electrode interface stabilizer.

6. The negative electrode according to claim 1, wherein
the content of the negative electrode active substance in the negative electrode is equal to or higher than 88 wt%.

7. The negative electrode according to claim 1, wherein
the negative electrode active substance contains graphite.

8. A semi-secondary battery comprising:
the negative electrode according to claim 1; and
a semi-solid electrolyte layer formed on the negative electrode.

9. A secondary battery comprising:
the negative electrode according to claim 1;
a positive electrode; and
a semi-solid electrolyte layer formed between the positive electrode and the negative electrode.
